# EUROPEAN PATENT APPLICATION

(11) **EP 4 694 350 A2**
(43) Date of publication of application: **11.02.2026**
(21) Application number: 25205667.6
(22) Date of filing: 04.04.2018
(51) Int. Cl.: H04W 36/32

(54) **WIRELESS COMMUNICATIONS METHOD AND APPARATUS**

(62) Divisional of application: 18913331.7
(71) Applicant: Huawei Technologies Co., Ltd., Shenzhen, Guangdong 518129 (CN)
(72) Inventor: TANG, Xun, Shenzhen, 518129 (CN); CHAI, Li, Shenzhen, 518129 (CN); WANG, Hong, Shenzhen, 518129 (CN); ZHANG, Jian, Shenzhen, 518129 (CN)
(74) Representative: Isarpatent

(57) **Abstract**

This application provides a wireless communications method and apparatus, to implement good performance of communication between a terminal device and a network device. The wireless communication method includes: generating flight path information, where the flight path information includes location information of at least one target node on a flight path; and sending the flight path information. Therefore, a target network device can determine, based on flight path information reported by the terminal device, a flight path along which the terminal device is to fly, and the target network device may determine, based on the future flight path, at least one network device serving the terminal device. Based on this, a success rate of handover of the terminal device in a network is improved; in this way, good performance of communication between the terminal device and the network device is implemented.

## Description

### TECHNICAL FIELD

This application relates to the communications field, and more specifically, to a wireless communications method and apparatus.

### BACKGROUND

With development of drone technologies, a price of a drone keeps decreasing, and the drone is more widely applied.

The drone communicates with a base station. Performance of the communication between the drone and the base station is critical to the drone.

Therefore, how to implement good performance of communication between a drone and a network device (for example, a base station) is an urgent problem to be resolved.

### SUMMARY

This application provides a wireless communications method and apparatus, to implement good performance of communication between a terminal device and a network device.

According to a first aspect, a wireless communication method is provided, including:
generating flight path information, where the flight path information includes location information of at least one target node on a flight path; and
sending the flight path information.

Therefore, a network device can determine, based on flight path information reported by the terminal device, a flight path along which the terminal device is to fly, and the network device may determine, based on the future flight path, at least one network device serving the terminal device. Based on this, a success rate of handover of the terminal device in a network is improved; in this way, good performance of communication between the terminal device and the network device is implemented.

Optionally, the flight path information may be a combination of a set of location information on the flight path, for example, may be a list including a plurality of pieces of location information. The location information may be coordinate information, for example, longitude information, latitude information, and height information, provided by various positioning systems. In addition, when the plurality of pieces of location information form a list, a sequence of the plurality of pieces of location information in the list is a sequence of passing through the at least one target node on the flight path by the terminal device.

Optionally, in this embodiment of this application, the flight path information may include location information of a start point and an end point of the flight path. In this case, the flight path may be a connection line between the start point and the end point. In this manner, the list of the location information on the flight path includes location information of only two location points (namely, the start point and the end point), and signaling overheads are the smallest. This manner is applicable to a scenario in which a distance between network devices (for example, base stations) is relatively large, and a flight path of a terminal device is relatively short.

Optionally, when the terminal device can report current location information, the terminal device may report only information about the end point of the flight path. In this case, the flight path information includes location information of only one node (namely, the end point). In this way, signaling overheads can be further reduced.

Optionally, in this embodiment of this application, for a non-linear (namely, curved) flight path, location information of an intermediate node on the flight path may be added. In other words, the location information of the at least one target node on the flight path may include location information of the start point, the end point, or at least one intermediate node. In this way, the terminal device may provide more detailed flight path information to the network device.

Optionally, in this embodiment of this application, at least one of a distance, a flight time length, or a quantity of nodes may be specified or indicated in a protocol or configuration information. Herein, the distance may indicate a distance or a minimum distance between two adjacent nodes, the flight time length may indicate a flight time length or a minimum flight time length (that is, a time interval used to determine an intermediate node) between two adjacent target nodes, and the quantity of nodes is used to indicate a quantity of reported target nodes.

In this way, the terminal device may report the flight path information based on a protocol specification or an indication of the network device. Therefore, the at least one target node in the flight path information meets a rule specified in the protocol, or the at least one target node in the flight path information meets a rule indicated by the configuration information.

Optionally, in this embodiment of this application, the configuration information may further include indication information indicating to report complete flight path information. Herein, the complete flight path information includes the location information of the start point and the end point.

In some possible implementations of the first aspect, the at least one target node in the flight path information meets a first rule, and the first rule includes at least one of the following:
a distance between two adjacent target nodes, a quantity of target nodes in the flight path information, and a flight time length between two adjacent target nodes.

In some possible implementations of the first aspect, the method further includes:
receiving a first message sent by a first network device, where the first message includes configuration information, and the configuration information includes at least one of the following:
the distance between two adjacent target nodes, the quantity of target nodes in the flight path information, the flight time length between two adjacent target nodes, an indication for indicating to report a complete flight path, and an indication for indicating to report timestamp information of the target node, where
the generating flight path information includes: generating the flight path information based on the configuration information; and
the sending the flight path information includes: sending the flight path information to the first network device.

In some possible implementations of the first aspect, the first message is a flight path request, or the first message is a measurement reporting configuration message.

In some possible implementations of the first aspect, the method further includes:

Optionally, in this embodiment of this application, when a source network device obtains the complete flight path information, the source network device may directly send the complete flight path information (carried in a handover request) to a target network device. In this case, the target network device can determine, based on the flight path information reported by the terminal device, the flight path along which the terminal device is to fly, and the target network device may determine, based on the future flight path, the at least one network device serving the terminal device. Based on this, the success rate of handover of the terminal device in the network is improved.

Optionally, if the source network device obtains a part of the flight path information, in a handover process, the source network device may indicate, to the target network device in the handover request, that the terminal device has flight path information. Correspondingly, a handover command may carry a flight path request or a configuration message.

Optionally, the terminal device may receive a handover command sent by a first network device, where the handover command is used to indicate to hand over from the first network device to a second network device, the handover command includes configuration information, and the configuration information includes at least one of the following:
the distance between two adjacent target nodes, the quantity of target nodes in the flight path information, the flight time length between two adjacent target nodes, an indication for indicating to report a complete flight path, and an indication for indicating to report timestamp information of the target node, where
the generating flight path information includes: generating the flight path information based on the configuration information; and
the sending the flight path information includes: sending the flight path information to the second network device.

Therefore, in this embodiment of this application, the network device can determine, based on the flight path information reported by the terminal device, the flight path along which the terminal device is to fly, and the network device may determine, based on the future flight path, the at least one network device serving the terminal device. Based on this, the success rate of handover of the terminal device in the network is improved.

In some possible implementations of the first aspect, the flight path information includes timestamp information of arrival at the target node. The timestamp information is added, to more accurately help the network device determine a location of the terminal device at any moment.

In some possible implementations of the first aspect, the flight path includes a flight path that is approximate to a straight line, and the location information of the at least one target node includes location information of a start node and an end node of the flight path that is approximate to a straight line.

Optionally, because the network device may not learn in advance whether the terminal device has flight path information, the terminal device may send, to the network device before reporting the flight path information, indication information indicating that the flight path information exists, to indicate that the terminal device has flight path information that can be reported.

In some possible implementations of the first aspect, the flight path information is generated when it is determined that a trigger condition is met; and
the trigger condition includes at least one of the following:
a minimum distance between a current location of a terminal device and a reported flight path is greater than or equal to a first threshold; and
signal strength of a neighboring cell of the terminal device is higher than signal strength of a current serving cell, and a difference between the signal strength of the neighboring cell and the signal strength of the current serving cell is greater than a second threshold.

Optionally, in this embodiment of this application, after the terminal device has reported flight path information #1 to the network device, when determining that the foregoing trigger condition is met, the terminal device may further generate flight path information #2, where the flight path information #2 includes location information of at least one target node on an updated flight path.

In some possible implementations of the first aspect, when the trigger condition is that the signal strength of the neighboring cell of the terminal device is higher than the signal strength of the current serving cell, and the difference between the signal strength of the neighboring cell and the signal strength of the current serving cell is greater than the second threshold, the sending the flight path information includes:
sending a measurement report, where the measurement report includes the flight path information.

Therefore, in this embodiment of this application, when the terminal device is located at a cell edge, the network device can determine, based on the flight path information reported by the terminal device, the flight path along which the terminal device is to fly, and the network device may determine, based on the future flight path, the at least one network device serving the terminal device. Based on this, the success rate of handover of the terminal device in the network is improved.

According to a second aspect, a wireless communication method is provided, including:
receiving flight path information sent by a terminal device, where the flight path information includes location information of at least one target node on a flight path.

Therefore, a network device can determine, based on the flight path information reported by the terminal device, a flight path along which the terminal device is to fly, and the network device may determine, based on the future flight path, at least one network device serving the terminal device. Based on this, a success rate of handover of the terminal device in a network is improved; in this way, good performance of communication between the terminal device and the network device is implemented.

Optionally, the flight path information may be a combination of a set of location information on the flight path, for example, may be a list including a plurality of pieces of location information. The location information may be coordinate information, for example, longitude information, latitude information, and height information, provided by various positioning systems. In addition, when the plurality of pieces of location information form a list, a sequence of the plurality of pieces of location information in the list is a sequence of passing through the at least one target node on the flight path by the terminal device.

Optionally, in this embodiment of this application, the flight path information may include location information of a start point and an end point of the flight path. In this case, the flight path may be a connection line between the start point and the end point. In this manner, the list of the location information on the flight path includes location information of only two location points (namely, the start point and the end point), and signaling overheads are the smallest. This manner is applicable to a scenario in which a distance between network devices (for example, base stations) is relatively large, and a flight path of a terminal device is relatively short.

Optionally, when the terminal device can report current location information, the terminal device may report only information about the end point of the flight path. In this case, the flight path information includes location information of only one node (namely, the end point). In this way, signaling overheads can be further reduced.

Optionally, in this embodiment of this application, for a non-linear (namely, curved) flight path, location information of an intermediate node on the flight path may be added. In other words, the location information of the at least one target node on the flight path may include location information of the start point, the end point, or at least one intermediate node. In this way, the terminal device may provide more detailed flight path information to the network device.

Optionally, in this embodiment of this application, at least one of a distance, a flight time length, or a quantity of nodes may be specified or indicated in a protocol or configuration information. Herein, the distance may indicate a distance or a minimum distance between two adjacent nodes, the flight time length may indicate a flight time length or a minimum flight time length (that is, a time interval used to determine an intermediate node) between two adjacent target nodes, and the quantity of nodes is used to indicate a quantity of reported target nodes.

In this way, the terminal device may report the flight path information based on a protocol specification or an indication of the network device. Therefore, the at least one target node in the flight path information meets a rule specified in the protocol, or the at least one target node in the flight path information meets a rule indicated by the configuration information.

Optionally, in this embodiment of this application, the configuration information may further include indication information indicating to report complete flight path information. Herein, the complete flight path information includes the location information of the start point and the end point.

In some possible implementations of the second aspect, the flight path information includes timestamp information of arrival at the target node. The timestamp information is added, to more accurately help the network device determine a location of the terminal device at any moment.

In some possible implementations of the second aspect, the at least one target node in the flight path information meets a first rule, and the first rule includes at least one of the following:
a distance between two adjacent target nodes, a quantity of target nodes in the flight path information, and a flight time length between two adjacent target nodes.

In some possible implementations of the second aspect, the flight path includes a flight path that is approximate to a straight line, and the location information of the at least one target node includes location information of a start node and an end node of the flight path that is approximate to a straight line.

In some possible implementations of the second aspect, the method is performed by a first network device, and further includes:
sending a first message to the terminal device, where the first message includes configuration information, and the configuration information includes at least one of the following:
the distance between two adjacent target nodes, the quantity of target nodes in the flight path information, the flight time length between two adjacent target nodes, an indication for indicating to report a complete flight path, and an indication for indicating to report timestamp information of the target node.

In some possible implementations of the second aspect, the first message is a flight path request, or the first message is a measurement reporting configuration message.

In some possible implementations of the second aspect, the method is performed by the first network device, and further includes:
determining, based on the flight path information, a need to hand over to a second network device; and
sending a first handover request to the second network device, where the first handover request includes the flight path information, or the first handover request includes indication information indicating that the flight path information exists.

Optionally, in this embodiment of this application, when a source network device obtains the complete flight path information, the source network device may directly send the complete flight path information (carried in a handover request) to a target network device. In this case, the target network device can determine, based on the flight path information reported by the terminal device, the flight path along which the terminal device is to fly, and the target network device may determine, based on the future flight path, the at least one network device serving the terminal device. Based on this, the success rate of handover of the terminal device in the network is improved.

Optionally, if the source network device obtains a part of the flight path information, in a handover process, the source network device may indicate, to the target network device in the handover request, that the terminal device has flight path information. Correspondingly, a handover command may carry a flight path request or a configuration message.

In some possible implementations of the second aspect, the method is performed by a second network device, and further includes:
receiving a second handover request message sent by a first network device, where the second handover request message includes indication information indicating that the flight path information exists; and
sending a handover acknowledgment corresponding to the second handover request to the first network device, where the handover acknowledgment includes configuration information, and the configuration information includes at least one of the following:
   the distance between two adjacent target nodes, the quantity of target nodes in the flight path information, the flight time length between two adjacent target nodes, an indication for indicating to report a complete flight path, and an indication for indicating to report timestamp information of the target node.

According to a third aspect, a wireless communications apparatus is provided. The communications apparatus is configured to perform the method according to any one of the foregoing aspects or any possible implementation of any one of the foregoing aspects. Specifically, the communications apparatus includes a unit configured to perform the method according to any one of the foregoing aspects or any possible implementation of any one of the foregoing aspects.

According to a fourth aspect, a wireless communications apparatus is provided. The apparatus includes a transceiver, a memory, a processor, and a bus system. The transceiver, the memory, and the processor are connected by using the bus system. The memory is configured to store an instruction. The processor is configured to execute the instruction stored in the memory, to control the transceiver to receive and/or send a signal. In addition, when the processor executes the instruction stored in the memory, the execution enables the processor to perform the method according to any one of the foregoing aspects or any possible implementation of any one of the foregoing aspects.

According to a fifth aspect, a computer-readable medium is provided and is configured to store a computer program. The computer program includes an instruction used to perform the method according to any possible implementation of any one of the foregoing aspects.

According to a sixth aspect, a computer program product is provided. The computer program product includes computer program code. When the computer program code is run by a communications unit, a processing unit or a transceiver, and a processor of a communications device (for example, a terminal device or a network device), the communications device performs the method according to any possible implementation of any one of the foregoing aspects.

According to a seventh aspect, a communications chip is provided. The communications chip stores an instruction, and when the instruction is run on a wireless communications apparatus, the communications chip is enabled to perform the method according to any possible implementation of any one of the foregoing aspects.

### BRIEF DESCRIPTION OF DRAWINGS

FIG. 1 is a schematic diagram of a communications system that uses a wireless communication method according to this application;
FIG. 2 is a schematic flowchart of a wireless communication method according to an embodiment of this application;
FIG. 3 is an example of a specific flight path according to an embodiment of this application;
FIG. 4 is a schematic flowchart of another wireless communication method according to an embodiment of this application;
FIG. 5 is a schematic flowchart of another wireless communication method according to an embodiment of this application;
FIG. 6 is an example of a specific flight path according to an embodiment of this application;
FIG. 7 is a schematic block diagram of a wireless communications apparatus according to an embodiment of this application;
FIG. 8 is a schematic block diagram of another wireless communications apparatus according to an embodiment of this application;
FIG. 9 is a schematic block diagram of another wireless communications apparatus according to an embodiment of this application; and
FIG. 10 is a schematic block diagram of another wireless communications apparatus according to an embodiment of this application.

### DESCRIPTION OF EMBODIMENTS

The following describes technical solutions of this application with reference to the accompanying drawings.

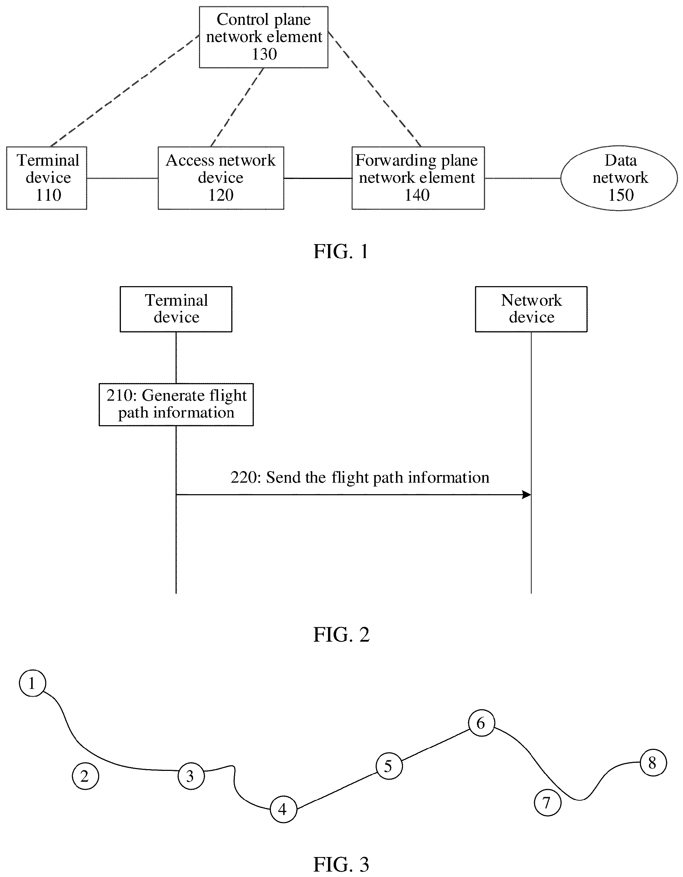

FIG. 1 is a schematic diagram of a communications system that uses a wireless communication method according to this application. As shown in FIG. 1, the communications system 100 includes a terminal device 110, an access network device 120, a control plane network element 130, a forwarding plane network element 140, and a data network 150. In addition, a person of ordinary skill in the art can understand that different devices in the communications system 100 communicate with each other through an interface.

The terminal device 110 may establish a user plane connection to the access network device 120 through a bearer, or may establish a communication signaling connection to the control plane network element 130 through an interface. Optionally, the terminal device 110 may be a drone, or may be another device that has a flight capability, such as an intelligent robot or a hot air balloon. Optionally, when a flight height of the terminal device 110 (for example, a drone) exceeds that of the access network device 120 (for example, a base station), the drone can "see" more base stations, that is, receive signals of a plurality of other base stations, causing increased interference in a downlink direction. As a result, a signal to interference plus noise ratio SINR of the drone in the downlink direction significantly deteriorates, and high-speed data transmission cannot be performed.

The access network device 120 may be a device that communicates with the terminal device 110, such as a base station or a base station controller. However, it may be understood that the access network device 120 may communicate with any quantity of terminal devices similar to the terminal device 110. The access network device 120 may further communicate with the control plane network element 130 through an interface. Similarly, the access network device 120 may further communicate with the forwarding plane network element 140 through an interface. Each access network device may provide communication coverage for a specific geographic area, and may communicate with a terminal device (for example, a drone) located within the coverage area (a cell). The access network device may support communication protocols of different standards, or may support different communication modes. Optionally, the access network device 120 may provide a radio access service for the drone. For example, the access network device 120 may be an evolved NodeB (Evolved Node B, eNodeB), a wireless fidelity access point (Wireless Fidelity Access Point, WiFi AP), a worldwide interoperability for microwave access base station (Worldwide Interoperability for Microwave Access Base Station, WiMAX BS), a radio controller in a cloud radio access network (Cloud Radio Access Network, CRAN), a network device in a future 5G network, or a network device in a future evolved public land mobile network (Public Land Mobile Network, PLMN).

The control plane network element 130 is responsible for mobility management and forwarding path management in the communications system 100. For example, the control plane network element 130 delivers a packet forwarding policy to the forwarding plane network element 140 to indicate a gateway forwarding plane (Gateway User Plane, GW-U) to perform packet processing and forwarding according to the packet forwarding policy. The control plane network element 130 may be a software defined network (Software Defined Network, SDN) controller, a gateway control plane (Gateway Control Plane, GW-C), a mobility management entity (Mobility Management Entity, MME), or all or some of control functions formed by integrating the foregoing network elements. A software defined network technology provides an effective way for a bottleneck problem of gateway signaling processing. A control plane interface signaling processing function and a user plane data forwarding function of a gateway are further separated, and the interface signaling processing function is placed on a general computing platform and becomes a control plane network element (Control Plane, CP). The user plane data forwarding function is placed on a dedicated hardware platform, and becomes a forwarding plane network element (User Plane, UP). The control plane network element 130 may further be divided into a mobility management network element and a session management network element. The mobility management network element is responsible for mobility management of the terminal device, such as network attachment of the terminal device, and a location change of the terminal device. The session management network element is responsible for session management of the terminal device, such as session establishment, session modification, and session release. In addition, through decoupling of controlling and forwarding of a gateway device, a design of a hardware platform is greatly simplified, costs of the hardware platform are reduced, and a mobile packet data network is faster deployed. The MME is mainly responsible for control-plane mobility management and session management, such as user authentication, handover, mobility management of a terminal in an idle mode, and user context and bearer management.

The forwarding plane network element 140 is responsible for packet processing and forwarding. The forwarding plane network element 140 may be a forwarding plane function of a packet data network gateway (Packet Data Network Getaway, P-GW), a forwarding plane function of a serving gateway (Serving Gateway, S-GW), or a physical or virtual forwarding device such as a router or a switch.

The data network 150 provides a data transmission service for a user, and may be a packet data network (Packet Data Network, PDN), for example, the Internet (Internet) or an Internet protocol multi-media service (IP Multi-media Service, IP IMS).

The terminal device 110 or the access network device 120 may be a wireless communications sending apparatus and/or a wireless communications receiving apparatus. When sending data, the wireless communications sending apparatus may encode the data for transmission. Specifically, the wireless communications sending apparatus may obtain (for example, generate, receive from another communications apparatus, or store in a memory) a particular quantity of data bits to be sent, through a channel, to the wireless communications receiving apparatus. The data bit may be included in a transport block (or a plurality of transport blocks) of the data, and the transport block may be segmented to produce a plurality of code blocks.

In addition, the communications system 100 may be a public land mobile network (Public Land Mobile Network, PLMN) network, a D2D (Device to Device) network, an M2M (Machine to Machine) network, or another network. FIG. 1 is merely a simplified schematic diagram of an example. The network may further include another network device that is not shown in FIG. 1.

The wireless communication method provided in the embodiments of this application may be applied to a terminal device (for example, a drone). The terminal device includes a hardware layer, an operating system layer run above the hardware layer, and an application layer run above the operating system layer. The hardware layer includes hardware such as a central processing unit (Central Processing Unit, CPU), a memory management unit (MMU, Memory Management Unit), and a memory (also referred to as a main memory). The operating system may be any one or more computer operating systems that implement service processing by using a process (Process), for example, a Linux operating system, a Unix operating system, an Android operating system, an iOS operating system, or a windows operating system. The application layer includes applications such as a browser, an address book, word processing software, and instant messaging software.

The wireless communication method provided in the embodiments of this application may be applied to a network device. The network device may be an access network device, or may be a data network.

In addition, aspects or features of this application may be implemented as a method, an apparatus or a product that uses standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk, or a magnetic tape), an optical disc (for example, a compact disc (Compact Disc, CD) and a digital versatile disc (Digital Versatile Disc, DVD)), a smart card and a flash memory component (for example, an erasable programmable read-only memory (Erasable Programmable Read-Only Memory, EPROM), a card, a stick, or a key drive). In addition, various storage media described in this specification may indicate one or more devices and/or other machine-readable media that are configured to store information. The term "machine-readable media" may include but is not limited to various media that can store, contain and/or carry an instruction and/or data.

FIG. 2 is a schematic flowchart of a wireless communication method according to an embodiment of this application. The method may be performed by a terminal device or a communications chip in a terminal device. Specifically, the terminal device may be a device in a drone, for example, may be a communications device in the drone, or may be a control device in the drone. As shown in FIG. 2, the method includes the following content.

210: Generate flight path information, where the flight path information includes location information of at least one target node on a flight path.

Herein, the at least one target node is one, two, or more target nodes. Specifically, the flight path information may be a combination of a set of location information on the flight path, for example, may be a list including a plurality of pieces of location information. The location information may be coordinate information, for example, longitude information, latitude information, and height information, provided by various positioning systems. For a specific format of the location information, refer to a format of a location information element (locationinfo IE) in an existing communications system, or may be separately specified. Details are not described herein. In this embodiment of this application, the flight path information may also be referred to as a flight path plan.

It should be understood that, in this embodiment of this application, when the plurality of pieces of location information form a list, a sequence of the plurality of pieces of location information in the list is a sequence of passing through the at least one target node on the flight path by the terminal device. For example, when a first target node is adjacent to a second target node, and the second target node is located after the first target node in the list, after the terminal device passes through the first target node in the flight path, a next node that the terminal device passes through is the second target node.

Herein, the flight path may be a path along which the terminal device is to fly in a time period from a first moment to a second moment. Optionally, the first moment may be a current moment, a moment before the current moment, or a moment after the current moment, and the second moment is a moment after the first moment. This is not limited in this embodiment of this application.

220: Send the flight path information.

Specifically, the terminal device sends the flight path information to a network device.

In this case, the network device can determine, based on the flight path information reported by the terminal device, a flight path along which the terminal device is to fly, and the network device may determine, based on the future flight path, at least one network device serving the terminal device. Based on this, a success rate of handover of the terminal device in a network is improved; in this way, good performance of communication between the terminal device and the network device is implemented.

Optionally, in this embodiment of this application, the flight path information may include location information of a start point and an end point of the flight path. In other words, in this case, the location information of the at least one target node may be the location information of the start point and the end point. Herein, the start point may also be referred to as a take-off point, and the end point may also be referred to as a landing point. In this case, the flight path may be a connection line between the start point and the end point. In this manner, the list of the location information on the flight path includes location information of only two location points (namely, the start point and the end point), and signaling overheads are the smallest. This manner is applicable to a scenario in which a distance between network devices (for example, base stations) is relatively large, and a flight path of a terminal device is relatively short.

For example, a distance between two adjacent network devices is 10 kilometers, a flight path along which the terminal device is to fly is 2 kilometers, and a range of the path of 2 kilometers is completely within coverage of a single network device. Alternatively, when the flight path of the terminal device is a simple straight line, only the location information of the start point and the end point on the flight path may be reported.

Further, when the terminal device can report current location information, the terminal device may report only information about the end point of the flight path. In this case, the flight path information includes location information of only one node (namely, the end point).

Optionally, in this embodiment of this application, for a non-linear (namely, curved) flight path, location information of an intermediate node on the flight path may be added. In other words, the location information of the at least one target node on the flight path may include location information of the start point, the end point, or at least one intermediate node. In this way, the terminal device may provide more detailed flight path information to the network device.

Specifically, in this embodiment of this application, for a flight path that is approximate to a straight line and along which the terminal device is to fly, only location information of a start point and an end point on the path may be reported. For a relatively tortuous flight path, an intermediate node may be reported at a specific distance. However, when the flight path is relatively long, there may be a case in which the straight line and the curve are mixed. In this case, reported information about a node on the flight path may be determined by using the foregoing two rules based on an actual request of the path.

Specifically, a principle for selecting the intermediate node may be specified in a protocol, or may be indicated by the network device. Optionally, the network device may send configuration information to the terminal device, where the configuration information is used to indicate a rule for selecting an intermediate node on the flight path.

Optionally, in this embodiment of this application, at least one of a distance, a flight time length, or a quantity of nodes may be specified or indicated in a protocol or configuration information. Herein, the distance may indicate a distance or a minimum distance between two adjacent nodes, the flight time length may indicate a flight time length or a minimum flight time length (that is, a time interval used to determine an intermediate node) between two adjacent target nodes, and the quantity of nodes is used to indicate a quantity of reported target nodes.

In this way, the terminal device may report the flight path information based on a protocol specification or an indication of the network device. Therefore, the at least one target node in the flight path information meets a rule specified in the protocol, or the at least one target node in the flight path information meets a rule indicated by the configuration information.

For example, when the distance is 500 meters (m), the terminal device may determine the intermediate node at an interval of a distance of 500 m. In this case, a distance between two adjacent target nodes in the at least one target node in the flight path information reported by the terminal device to the network device is 500 m; alternatively, the minimum distance is 500 m. For another example, when the flight time length is 1 minute (min), the terminal device may determine the intermediate node based on a flight distance in each 1 min. In this case, a flight time length between two adjacent target nodes in the at least one target node in the flight path information reported by the terminal device to the network device is 1 min. To be specific, assuming that the terminal device is located at the first target node of the at least one target node in the flight path information at a moment, 1 min after the moment, the terminal device flies to the second target node that is in the at least one target node and that is adjacent to the first target node. In addition, the second target node is a node on a side close to the end point of the flight path. For another example, when the quantity of nodes is 10, the terminal device may report location information of the 10 nodes on the flight path.

Optionally, in this embodiment of this application, in a specific implementation, the terminal device may report complete flight path information in a single report. In another specific implementation, the terminal device may report a part of the flight path information in a single report, and report the complete flight path information to the network device through a plurality of reports. Herein, the complete flight path information includes the location information of the start point and the end point.

Optionally, in this embodiment of this application, the configuration information may further include indication information indicating to report complete flight path information. In an example, if the configuration information includes indication information indicating to report the complete flight path information, the configuration information may further indicate at least one of a distance between two adjacent nodes, a quantity of intermediate nodes, a total quantity of nodes that can be reported, and whether to report only an end point location. In another example, if the configuration information includes indication information indicating to report a part of the flight path information, the configuration information may further indicate at least one of a quantity of reported nodes, a distance between two adjacent nodes, and a total flight distance.

Optionally, in this embodiment of this application, it may be specified in the protocol that the terminal device may simplify the flight path information based on an actual case, or the configuration information may further include indication information indicating to simplify the flight path information. Specifically, for a flight path that is approximate to a straight line, the terminal device may report only a start point and an end point of the path, and does not need to report, according to a protocol specification or an indication of the network device, another intermediate node on the path. In this way, signaling overheads can be reduced by simplifying the flight path information, that is, by omitting the intermediate node on the straight-line flight path.

Optionally, the flight path information includes timestamp information of arrival at the target node.

Specifically, on a basis of reported location information of each node, timestamp information of each node is further added. Herein, the timestamp information may be an absolute time, for example, hour/minute/second, or may be a time of a communications network, for example, in a form of a frame number + a subframe number. The timestamp information is added, to more accurately help the network device determine a location of the terminal device at any moment.

Optionally, the network device may indicate, in the configuration information, the terminal device to report timestamp information of the intermediate node, or it may be specified in the protocol that the flight path information needs to include location and timestamp information of a node (including the start point, the intermediate node, or the end point).

For example, FIG. 3 is an example of a specific flight path according to an embodiment of this application. Specifically, a node 1 is a take-off point, a node 8 is a landing point, and a node 2 to a node 7 are intermediate nodes determined according to a protocol specification or an indication of a network device. The node 4, the node 5, and the node 6 are approximately on a straight line. Therefore, in this case, a terminal device may omit reporting of location information of the node 5. That is, only location information of the node 1, the node 2, the node 3, the node 4, the node 6, the node 7, and the node 8 is reported.

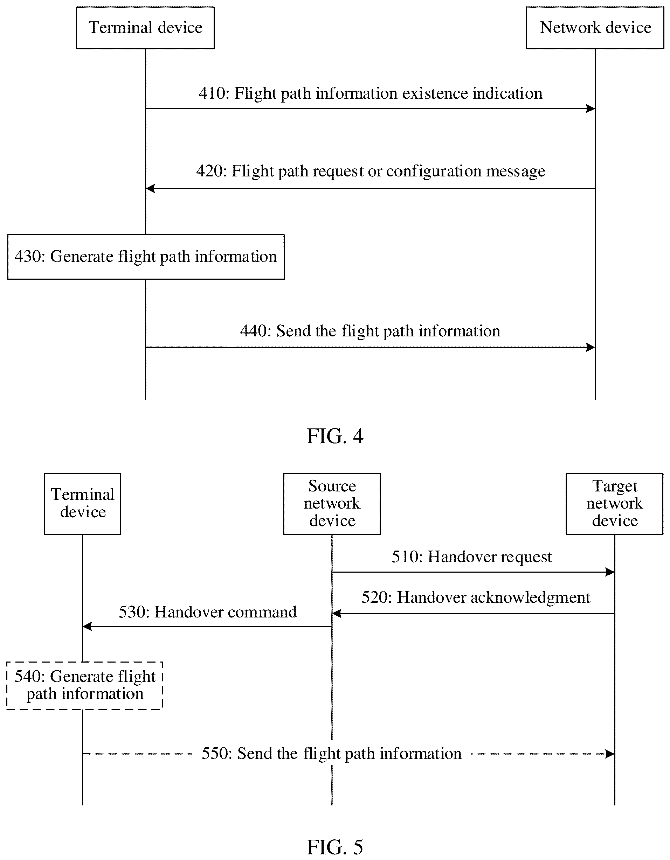

FIG. 4 is a schematic flowchart of another wireless communication method according to an embodiment of this application. It should be understood that FIG. 4 shows steps or operations of the wireless communication method, but these steps or operations are merely examples. In this embodiment of this application, other operations or variations of the operations in FIG. 4 may be further performed. In addition, the steps in FIG. 4 may be performed in a sequence different from that shown in FIG. 4, and possibly, not all the operations in FIG. 4 need to be performed.

S410: A terminal device sends, to a network device, an indication indicating that flight path information exists.

Specifically, because the network device may not learn in advance whether the terminal device has flight path information, the terminal device may send, to the network device before reporting the flight path information, indication information indicating that the flight path information exists, to indicate that the terminal device has flight path information that can be reported.

Herein, the indication information may be an independent message, for example, an RRC message, or may be an information element (information element, IE) added to an existing RRC message. Herein, the RRC message is, for example, an RRC connection setup complete (RRC Connection Setup Complete) message, or a UE information response (UE information Response) message. This is not specifically limited in this embodiment of this application. In addition, the IE may be specifically a flight path information existence indication (flighpathinfoavailability).

420: The network device sends a flight path request to the terminal device, or the network device sends a configuration message to the terminal device.

Specifically, the flight path request or the configuration message may include configuration information. Specifically, for the configuration information, refer to the foregoing descriptions in FIG. 1. To avoid repetition, details are not described herein again. Herein, the configuration message may be specifically a measurement reporting configuration message.

430: The terminal device generates the flight path information.

Specifically, the terminal device may generate the flight path information based on an indication of the configuration information. Herein, for the flight path information, refer to the foregoing descriptions. To avoid repetition, details are not described herein again.

440: The terminal device sends the flight path information to the network device.

The flight path information may be included in a measurement report and reported to the network device, or may be reported to the network device as an independent RRC message. Optionally, on a basis of reported location information of each node, timestamp information of each node is further added, where the timestamp information may be an absolute time, for example, hour/minute/second, or may be a time of a communications network, for example, in a format of a frame number + a subframe number. The timestamp information is added, to more accurately help the network device determine a location of the terminal device at any moment.

Therefore, in this embodiment of this application, the network device can determine, based on the flight path information reported by the terminal device, a flight path along which the terminal device is to fly, and the network device may determine, based on the future flight path, at least one network device serving the terminal device. Based on this, a success rate of handover of the terminal device in a network is improved; in this way, good performance of communication between the terminal device and the network device is implemented.

Herein, if the flight path information includes a part of flight path information, and a serving cell does not change after the terminal device completes flight along the reported path, the terminal device may continue to send, to the network device, indication information indicating that a flight path exists, or information indicating that the flight path has been completed. After receiving the indication information indicating that a flight path exists, the network device may send a flight path request or a configuration message to the terminal device, and the terminal device continues to report flight path information according to the flight path request or the configuration information in the configuration message.

Optionally, in this embodiment of this application, if a cell handover occurs, that is, the serving cell changes, during flight of the terminal device, in the handover process of the serving cell, a source network device and a target network device may directly exchange flight path information.

FIG. 5 is a schematic flowchart of another wireless communication method according to an embodiment of this application. It should be understood that FIG. 5 shows steps or operations of the wireless communication method, but these steps or operations are merely examples. In this embodiment of this application, other operations or variations of the operations in FIG. 5 may be further performed. In addition, the steps in FIG. 5 may be performed in a sequence different from that shown in FIG. 5, and possibly, not all operations in FIG. 5 need to be performed.

510: A source network device sends a handover request to a target network device, where the handover request may directly carry flight path information reported by a terminal device. Herein, the flight path information may be complete flight path information, or may be a part of flight path information.

520: The target network device sends a handover acknowledgment to the source network device, where a container (container) of the handover acknowledgment message may include a handover command that needs to be forwarded to the terminal device. Optionally, the handover command may include a notification message, and the notification message is used to notify the terminal device that the target network device has obtained the flight path information.

530: The source network device sends the handover command to the terminal device.

Specifically, the terminal device may perform handover according to the received handover command.

Optionally, in this embodiment of this application, when the source network device obtains the complete flight path information, the source network device may directly send the complete flight path information to the target network device. In this case, the target network device can determine, based on the flight path information reported by the terminal device, a flight path along which the terminal device is to fly, and the target network device may determine, based on the future flight path, at least one network device serving the terminal device. Based on this, a success rate of handover of the terminal device in a network is improved; in this way, good performance of communication between the terminal device and the network device is implemented.

Optionally, if the source network device obtains a part of the flight path information, in a handover process, the source network device may indicate, to the target network device in the handover request, that the terminal device has flight path information. Correspondingly, the handover command may carry the flight path request or the configuration message. Specifically, for the flight path request and the configuration message, refer to the descriptions in FIG. 4. To avoid repetition, details are not described herein again. In addition, when the source network device obtains the part of the flight path information, the method further includes 540 and 550.

540: The terminal device generates the flight path information.

Specifically, after receiving the handover command, the terminal device may generate the flight path information based on the flight path request or the configuration information in the handover command. Specifically, for a manner of generating the flight path information, refer to the foregoing descriptions. To avoid repetition, details are not described herein again.

550: The terminal device sends the flight path information to the target network device.

The terminal device may carry the flight path information in an RRC connection reconfiguration complete (RRC Connection Reconfiguration Complete) message, or may send the flight path information to the network device together with the RRC reconfiguration message as an independent message.

Therefore, the target network device can determine, based on the flight path information reported by the terminal device, the flight path along which the terminal device is to fly, and the target network device may determine, based on the future flight path, the at least one network device serving the terminal device. Based on this, the success rate of handover of the terminal device in the network is improved; in this way, good performance of communication between the terminal device and the network device is implemented.

Optionally, in this embodiment of this application, the terminal device may actively report the flight path information to the network device. Specifically, when a trigger condition is met, the terminal device may report the flight path information to the network device. Herein, the trigger condition may include at least one of the following:
a minimum distance between a current location of the terminal device and a reported flight path is greater than or equal to a first threshold; and
signal strength of a neighboring cell of the terminal device is higher than signal strength of a current serving cell, and a difference between the signal strength of the neighboring cell and the signal strength of the current serving cell is greater than a second threshold.

Optionally, in this embodiment of this application, after the terminal device has reported flight path information #1 to the network device, when determining that the foregoing trigger condition is met, the terminal device may further generate flight path information #2, where the flight path information #2 includes location information of at least one target node on an updated flight path.

Specifically, when the terminal device has reported the flight path information #1 to a currently serving network device, and the minimum distance between the current location of the terminal device and the reported flight path is greater than or equal to the first threshold, that is, a subsequent flight path deviates from the reported flight path, the terminal device may update the flight path information, and reports the updated flight path information #2 to the network device. Specifically, a start point of the updated flight path may be a current actual location, and an end point of the updated flight path may be the same as an end point of the previously reported flight path. Herein, the first threshold may be predefined, or may be indicated by the network device. This is not limited in this embodiment of this application.

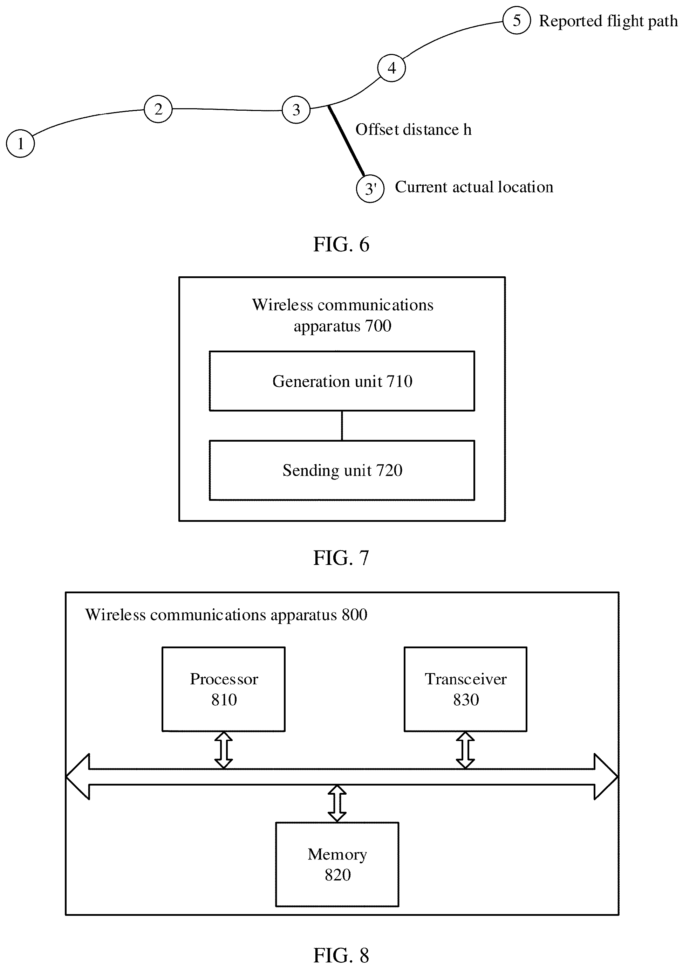

FIG. 6 is an example of a specific flight path according to an embodiment of this application. The flight path shown in FIG. 6 includes a node 1, a node 2, a node 3, a node 4, and a node 5, and the flight path is, for example, a flight path indicated by flight path information #1 reported by a terminal device to a network device at a third moment. However, a current actual location 3' of the terminal device deviates from the flight path reported at the third moment, and an offset distance (that is, a minimum distance between the current location and the reported flight path) h is greater than a first threshold. In this case, the terminal device may report flight path information #2 to the network device, and a start point of a flight path indicated by the re-reported flight path information #2 may be the current actual location, and an end point may be the node 5. The flight path information #2 may further include location information of a node on a flight path along which the terminal device is to fly after the node 5. This is not limited in this embodiment of this application.

Specifically, signal strength of a neighboring cell of the terminal device is higher than signal strength of a current serving cell, and a difference between the signal strength of the neighboring cell and the signal strength of the current serving cell is greater than a second threshold. In this case, the terminal device is located in an edge area of the cell, and the terminal device may report subsequent flight path information, to help the network device determine a target cell and a target network device to which the network device needs to be handed over. In other words, information about a flight path crossing a cell edge helps optimize handover performance.

In this embodiment of this application, in a specific implementation, the flight path information may be bound to an A3 event. A trigger condition of the A3 event is that the signal strength of the neighboring cell is higher than the signal strength of the serving cell by a threshold. When the A3 event is triggered, it indicates that the terminal device is already at the cell edge of the current serving cell. In this case, the terminal device may carry the flight path information in a measurement report. Herein, the flight path information may be generated based on configuration information sent by the network device. For example, the network device may add the configuration information to a measurement configuration message. The configuration information may indicate the terminal device to report the flight path information to the network device when the A3 event is triggered, and the reported flight path information includes location information of five nodes, a distance between two adjacent nodes is 100 m.

Optionally, in this embodiment of this application, when flight along the flight path indicated by the flight path information reported by the terminal device has completed, and the serving cell of the terminal device does not change, that is, the currently serving network device cannot obtain subsequent flight path information, the terminal device may report a subsequent flight path based on a previous configuration.

For example, the configuration information previously sent by the network device to the terminal device indicates a terminal to report location information of 10 nodes on the flight path, and a distance between every two adjacent nodes is 200 m. If the serving cell of the terminal device does not change after the terminal device reports flight path information #3 based on the configuration information, the terminal device continues to report flight path information #4 to the network device based on the configuration information when flight along a flight path indicated by the flight path information #3 is completed (or is about to be completed). The flight path information #4 includes location information of 10 subsequent nodes on the flight path indicated by the flight path information #3, and a distance between two adjacent nodes is 200 m.

It should be understood that, in this embodiment of this application, functions of the flight path information #1, the flight path information #2, the flight path information #3, and the flight path information #4 are the same, and are merely used to distinguish between two pieces of flight path information that are sequentially generated by the terminal device at different moments, and should not be construed as a limitation on this embodiment of this application.

Optionally, in this embodiment of this application, the flight path reported by the terminal device to the network device is usually preset. However, after the terminal device enters a manual mode, information about the preset flight path is possibly no longer valid. In this case, the terminal device may send a notification message to the network device, to notify the network device that the terminal device enters the manual operation mode. After the terminal device enters the manual operation mode, the terminal device has no flight path information that can be reported. In this case, the terminal device may report current location information, and/or current speed information, flight direction information, and the like to the network device. Specifically, the network device may send, to the terminal device, configuration information used to indicate how to report a real-time location. For example, the configuration information may indicate to report real-time location information in a periodic reporting manner.

Therefore, the target network device can determine, based on the flight path information reported by the terminal device, a flight path along which the terminal device is to fly, and the target network device may determine, based on the future flight path, at least one network device serving the terminal device. Based on this, a success rate of handover of the terminal device in a network is improved; in this way, good performance of communication between the terminal device and the network device is implemented.

FIG. 7 is a schematic block diagram of a wireless communications apparatus 700 according to an embodiment of this application.

A generation unit 710 is configured to generate flight path information, where the flight path information includes location information of at least one target node on a flight path.

A sending unit 720 is configured to send the flight path information.

Therefore, a network device can determine, based on flight path information reported by the terminal device, a flight path along which the terminal device is to fly, and the network device may determine, based on the future flight path, at least one network device serving the terminal device. Based on this, a success rate of handover of the terminal device in a network is improved; in this way, good performance of communication between the terminal device and the network device is implemented.

Optionally, the at least one target node in the flight path information meets a first rule, and the first rule includes at least one of the following:
a distance between two adjacent target nodes, a quantity of target nodes in the flight path information, and a flight time length between two adjacent target nodes.

Optionally, the apparatus further includes:
a first receiving unit, configured to receive a first message sent by a first network device, where the first message includes configuration information, and the configuration information includes at least one of the following:
the distance between two adjacent target nodes, the quantity of target nodes in the flight path information, the flight time length between two adjacent target nodes, an indication for indicating to report a complete flight path, and an indication for indicating to report timestamp information of the target node, where
the generation unit 710 is specifically configured to generate the flight path information based on the configuration information; and
the sending unit 720 is specifically configured to send the flight path information to the first network device.

Optionally, the first message is a flight path request, or the first message is a measurement reporting configuration message.

Optionally, the apparatus further includes: a second receiving unit, configured to receive a handover command sent by a first network device, where the handover command is used to indicate to hand over from the first network device to a second network device, the handover command includes configuration information, and the configuration information includes at least one of the following:
the distance between two adjacent target nodes, the quantity of target nodes in the flight path information, the flight time length between two adjacent target nodes, an indication for indicating to report a complete flight path, and an indication for indicating to report timestamp information of the target node, where
the generation unit 710 is specifically configured to generate the flight path information based on the configuration information; and
the sending unit 720 is specifically configured to send the flight path information to the second network device.

Optionally, the flight path includes a flight path that is approximate to a straight line, and the location information of the at least one target node includes location information of a start node and an end node of the flight path that is approximate to a straight line.

Optionally, the flight path information includes timestamp information of arrival at the target node.

Optionally, the generation unit 710 is specifically configured to generate the flight path information when it is determined that a trigger condition is met; and
the trigger condition includes at least one of the following:
a minimum distance between a current location of the terminal device and a reported flight path is greater than or equal to a first threshold; and
signal strength of a neighboring cell of the terminal device is higher than signal strength of a current serving cell, and a difference between the signal strength of the neighboring cell and the signal strength of the current serving cell is greater than a second threshold.

Optionally, when the trigger condition is that the signal strength of the neighboring cell of the terminal device is higher than the signal strength of the current serving cell, and the difference between the signal strength of the neighboring cell and the signal strength of the current serving cell is greater than the second threshold, the sending unit 720 is specifically configured to send a measurement report, where the measurement report includes the flight path information.

It should be noted that, in this embodiment of the present invention, the generation unit 710 may be implemented by a processor, and the sending unit 720 may be implemented by a transceiver. As shown in FIG. 8, a wireless communications apparatus 800 may include a processor 810, a memory 820, and a transceiver 830. The memory 820 may be configured to store, for example, code to be executed by the processor 810. The processor 810 may be configured to process data or a program.

In an implementation process, steps in the foregoing methods can be implemented by using a hardware integrated logical circuit in the processor 810, or by using instructions in a form of software. The steps of the method disclosed with reference to the embodiments of the present invention may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory 820, and the processor 810 reads information in the memory 820 and completes the steps in the foregoing methods in combination with hardware of the processor. To avoid repetition, details are not described herein again.

The wireless communications apparatus 700 shown in FIG. 7 or the wireless communications apparatus 800 shown in FIG. 8 can implement processes of the terminal device corresponding to the foregoing method embodiments. Specifically, for the wireless communications apparatus 700 or the wireless communications apparatus 800, refer to the foregoing descriptions. To avoid repetition, details are not described herein again.

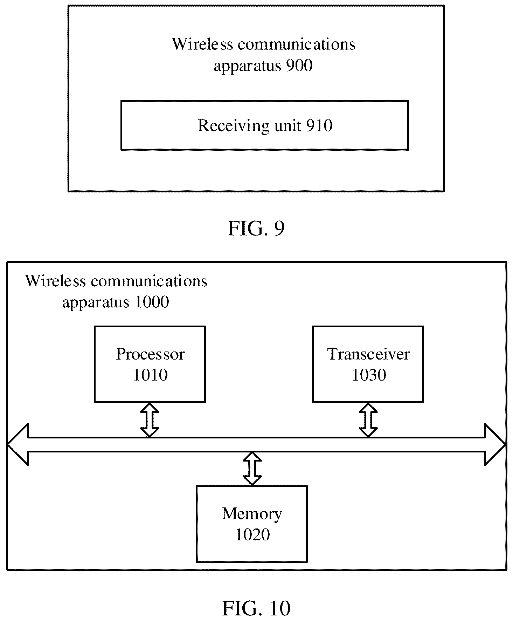

FIG. 9 is a schematic block diagram of a wireless communications apparatus 900 according to an embodiment of this application.

A receiving unit 910 is configured to receive flight path information sent by a terminal device, where the flight path information includes location information of at least one target node on a flight path.

Therefore, a network device can determine, based on the flight path information reported by the terminal device, a flight path along which the terminal device is to fly, and the network device may determine, based on the future flight path, at least one network device serving the terminal device. Based on this, a success rate of handover of the terminal device in a network is improved; in this way, good performance of communication between the terminal device and the network device is implemented.

Optionally, the at least one target node in the flight path information meets a first rule, and the first rule includes at least one of the following:
a distance between two adjacent target nodes, a quantity of target nodes in the flight path information, and a flight time length between two adjacent target nodes.

Optionally, the flight path includes a flight path that is approximate to a straight line, and the location information of the at least one target node includes location information of a start node and an end node of the flight path that is approximate to a straight line.

Optionally, the flight path information includes timestamp information of arrival at the target node.

Optionally, the apparatus is a first network device, and further includes:
a first sending unit, configured to send a first message to the terminal device, where the first message includes configuration information, and the configuration information includes at least one of the following:
the distance between two adjacent target nodes, the quantity of target nodes in the flight path information, the flight time length between two adjacent target nodes, an indication for indicating to report a complete flight path, and an indication for indicating to report timestamp information of the target node.

Optionally, the first message is a flight path request, or the first message is a measurement reporting configuration message.

Optionally, the apparatus is a first network device, and further includes:
a determining unit, configured to determine, based on the flight path information, a need to hand over to a second network device; and
a second sending unit, configured to send a first handover request to the second network device, where the first handover request includes the flight path information, or the first handover request includes indication information indicating that the flight path information exists.

Optionally, the apparatus is a second network device.

The receiving unit is further configured to receive a second handover request message sent by a first network device, where the second handover request message includes indication information indicating that the flight path information exists; and
the apparatus further includes a third sending unit, configured to send a handover acknowledgment corresponding to the second handover request to the first network device, where the handover acknowledgment includes configuration information, and the configuration information includes at least one of the following:
the distance between two adjacent target nodes, the quantity of target nodes in the flight path information, the flight time length between two adjacent target nodes, an indication for indicating to report a complete flight path, and an indication for indicating to report timestamp information of the target node.

It should be noted that in this embodiment of the present invention, the receiving unit 910 may be implemented by a transceiver. As shown in FIG. 10, a wireless communications apparatus 1000 may include a processor 1010, a memory 1020, and a transceiver 1030. The memory 1020 may be configured to store, for example, code to be executed by the processor 1010. The processor 1010 may be configured to process data or a program.

In an implementation process, steps in the foregoing methods can be implemented by using a hardware integrated logical circuit in the processor 1010, or by using instructions in a form of software. The steps of the method disclosed with reference to the embodiments of the present invention may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory 1020, and the processor 1010 reads information in the memory 1020 and completes the steps in the foregoing methods in combination with hardware of the processor. To avoid repetition, details are not described herein again.

The wireless communications apparatus 900 shown in FIG. 9 or the wireless communications apparatus 1000 shown in FIG. 10 can implement processes of the network device corresponding to the foregoing method embodiments. Specifically, for the wireless communications apparatus 900 or the wireless communications apparatus 1000, refer to the foregoing descriptions. To avoid repetition, details are not described herein again.

An embodiment of this application further provides a computer-readable medium, configured to store a computer program. The computer program includes an instruction used to perform the method corresponding to the terminal device or the network device in the foregoing method embodiments.

An embodiment of this application further provides a computer program product. The computer program product includes computer program code. When the computer program code is run by a communications unit, a processing unit or a transceiver, and a processor of a communications device (for example, a terminal device or a network device), the communications device performs the method corresponding to the terminal device or the network device in the foregoing method embodiments.

An embodiment of this application further provides a communications chip. The communications chip stores an instruction, and when the instruction is run on a communications apparatus, the communications chip is enabled to perform the method corresponding to the terminal device or the network device in the foregoing method embodiments.

The embodiments of this application may be independently or jointly used. This is not limited herein.

It should be understood that descriptions such as "first" and "second" in the embodiments of this application are only used as examples and used to distinguish between objects, neither indicate a sequence, nor indicate a specific limitation on a quantity of devices in the embodiments of this application, and cannot constitute any limitation on the embodiments of this application.

It should be further understood that sequence numbers of the foregoing processes do not mean execution sequences in various embodiments of this application. The execution sequences of the processes should be determined according to functions and internal logic of the processes, and should not be construed as any limitation on the implementation processes of the embodiments of this application.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

Further embodiments of the present invention are provided in the following. It should be noted that the numbering used in the following section does not necessarily need to comply with the numbering used in the previous sections.

Embodiment 1. A wireless communication method, comprising:
generating flight path information, wherein the flight path information comprises location information of at least one target node on a flight path; and
sending the flight path information.

Embodiment 2. The method according to embodiment 1, wherein the at least one target node in the flight path information meets a first rule, and the first rule comprises at least one of the following:
a distance between two adjacent target nodes, a quantity of target nodes in the flight path information, and a flight time length between two adjacent target nodes.

Embodiment 3. The method according to embodiment 1 or 2, further comprising:
receiving a first message sent by a first network device, wherein the first message comprises configuration information, and the configuration information comprises at least one of the following:
the distance between two adjacent target nodes, the quantity of target nodes in the flight path information, the flight time length between two adjacent target nodes, an indication for indicating to report a complete flight path, and an indication for indicating to report timestamp information of the target node, wherein
the generating flight path information comprises: generating the flight path information based on the configuration information; and
the sending the flight path information comprises: sending the flight path information to the first network device.

Embodiment 4. The method according to embodiment 3, wherein the first message is a flight path request, or the first message is a measurement reporting configuration message.

Embodiment 5. The method according to embodiment 1 or 2, further comprising:
receiving a handover command sent by a first network device, wherein the handover command is used to indicate to hand over from the first network device to a second network device, the handover command comprises configuration information, and the configuration information comprises at least one of the following:
the distance between two adjacent target nodes, the quantity of target nodes in the flight path information, the flight time length between two adjacent target nodes, an indication for indicating to report a complete flight path, and an indication for indicating to report timestamp information of the target node, wherein
the generating flight path information comprises: generating the flight path information based on the configuration information; and
the sending the flight path information comprises: sending the flight path information to the second network device.

Embodiment 6. The method according to any one of embodiments 1 to 5, wherein the flight path information comprises timestamp information of arrival at the target node.

Embodiment 7. The method according to any one of embodiments 1 to 6, wherein the flight path information is generated when it is determined that a trigger condition is met; and
the trigger condition comprises at least one of the following:
a minimum distance between a current location of a terminal device and a reported flight path is greater than or equal to a first threshold; and
signal strength of a neighboring cell of the terminal device is higher than signal strength of a current serving cell, and a difference between the signal strength of the neighboring cell and the signal strength of the current serving cell is greater than a second threshold.

Embodiment 8. The method according to embodiment 7, wherein when the trigger condition is that the signal strength of the neighboring cell of the terminal device is higher than the signal strength of the current serving cell, and the difference between the signal strength of the neighboring cell and the signal strength of the current serving cell is greater than the second threshold, the sending the flight path information comprises:
sending a measurement report, wherein the measurement report comprises the flight path information.

Embodiment 9. A wireless communication method, comprising:
receiving flight path information sent by a terminal device, wherein the flight path information comprises location information of at least one target node on a flight path.

Embodiment 10. The method according to embodiment 9, wherein the at least one target node in the flight path information meets a first rule, and the first rule comprises at least one of the following:
a distance between two adjacent target nodes, a quantity of target nodes in the flight path information, and a flight time length between two adjacent target nodes.

Embodiment 11. The method according to embodiment 9 or 10, wherein the flight path information comprises timestamp information of arrival at the target node.

Embodiment 12. The method according to any one of embodiments 9 to **11,** wherein the method is performed by a first network device, and further comprises:
sending a first message to the terminal device, wherein the first message comprises configuration information, and the configuration information comprises at least one of the following:
the distance between two adjacent target nodes, the quantity of target nodes in the flight path information, the flight time length between two adjacent target nodes, an indication for indicating to report a complete flight path, and an indication for indicating to report timestamp information of the target node.

Embodiment 13. The method according to embodiment 12, wherein the first message is a flight path request, or the first message is a measurement reporting configuration message.

Embodiment 14. The method according to any one of embodiments 9 to 13, wherein the method is performed by the first network device, and further comprises:
determining, based on the flight path information, a need to hand over to a second network device; and
sending a first handover request to the second network device, wherein the first handover request comprises the flight path information, or the first handover request comprises indication information indicating that the flight path information exists.

Embodiment 15. The method according to any one of embodiments 9 to **11,** wherein the method is performed by a second network device, and further comprises:
receiving a second handover request message sent by a first network device, wherein the second handover request message comprises indication information indicating that the flight path information exists; and
sending a handover acknowledgment corresponding to the second handover request to the first network device, wherein the handover acknowledgment comprises configuration information, and the configuration information comprises at least one of the following:
   the distance between two adjacent target nodes, the quantity of target nodes in the flight path information, the flight time length between two adjacent target nodes, an indication for indicating to report a complete flight path, and an indication for indicating to report timestamp information of the target node.

Embodiment 16. A wireless communications apparatus, comprising:
a generation unit, configured to generate flight path information, wherein the flight path information comprises location information of at least one target node on a flight path; and
a sending unit, configured to send the flight path information.

Embodiment 17. The apparatus according to embodiment 16, wherein the at least one target node in the flight path information meets a first rule, and the first rule comprises at least one of the following:
a distance between two adjacent target nodes, a quantity of target nodes in the flight path information, and a flight time length between two adjacent target nodes.

Embodiment 18. The apparatus according to embodiment 16 or 17, further comprising:
a first receiving unit, configured to receive a first message sent by a first network device, wherein the first message comprises configuration information, and the configuration information comprises at least one of the following:
the distance between two adjacent target nodes, the quantity of target nodes in the flight path information, the flight time length between two adjacent target nodes, an indication for indicating to report a complete flight path, and an indication for indicating to report timestamp information of the target node, wherein
the generation unit is specifically configured to generate the flight path information based on the configuration information; and
the sending unit is specifically configured to send the flight path information to the first network device.

Embodiment 19. The apparatus according to embodiment 18, wherein the first message is a flight path request, or the first message is a measurement reporting configuration message.

Embodiment 20. The apparatus according to embodiment 16 or 17, further comprising:
a second receiving unit, configured to receive a handover command sent by a first network device, wherein the handover command is used to indicate to hand over from the first network device to a second network device, the handover command comprises configuration information, and the configuration information comprises at least one of the following:
the distance between two adjacent target nodes, the quantity of target nodes in the flight path information, the flight time length between two adjacent target nodes, an indication for indicating to report a complete flight path, and an indication for indicating to report timestamp information of the target node, wherein
the generation unit is specifically configured to generate the flight path information based on the configuration information; and
the sending unit is specifically configured to send the flight path information to the second network device.

Embodiment 21. The apparatus according to any one of embodiments 16 to 20, wherein the flight path information comprises timestamp information of arrival at the target node.

Embodiment 22. The apparatus according to any one of embodiments 16 to 21, wherein the generation unit is specifically configured to generate the flight path information when it is determined that a trigger condition is met; and
the trigger condition comprises at least one of the following:
a minimum distance between a current location of a terminal device and a reported flight path is greater than or equal to a first threshold; and
signal strength of a neighboring cell of the terminal device is higher than signal strength of a current serving cell, and a difference between the signal strength of the neighboring cell and the signal strength of the current serving cell is greater than a second threshold.

Embodiment 23. The apparatus according to embodiment 22, wherein when the trigger condition is that the signal strength of the neighboring cell of the terminal device is higher than the signal strength of the current serving cell, and the difference between the signal strength of the neighboring cell and the signal strength of the current serving cell is greater than the second threshold, the sending unit is specifically configured to send a measurement report, wherein the measurement report comprises the flight path information.

Embodiment 24. A wireless communications apparatus, comprising:
a receiving unit, configured to receive flight path information sent by a terminal device, wherein the flight path information comprises location information of at least one target node on a flight path.

Embodiment 25. The apparatus according to embodiment 24, wherein the at least one target node in the flight path information meets a first rule, and the first rule comprises at least one of the following:
a distance between two adjacent target nodes, a quantity of target nodes in the flight path information, and a flight time length between two adjacent target nodes.

Embodiment 26. The apparatus according to embodiment 24 or 25, wherein the flight path information comprises timestamp information of arrival at the target node.

Embodiment 27. The apparatus according to any one of embodiments 24 to 26, wherein the apparatus is a first network device, and further comprises:
a first sending unit, configured to send a first message to the terminal device, wherein the first message comprises configuration information, and the configuration information comprises at least one of the following:
the distance between two adjacent target nodes, the quantity of target nodes in the flight path information, the flight time length between two adjacent target nodes, an indication for indicating to report a complete flight path, and an indication for indicating to report timestamp information of the target node.

Embodiment 28. The apparatus according to embodiment 27, wherein the first message is a flight path request, or the first message is a measurement reporting configuration message.

Embodiment 29. The apparatus according to any one of embodiments 24 to 28, wherein the apparatus is a first network device, and further comprises:
a determining unit, configured to determine, based on the flight path information, a need to hand over to a second network device; and
a second sending unit, configured to send a first handover request to the second network device, wherein the first handover request comprises the flight path information, or the first handover request comprises indication information indicating that the flight path information exists.

Embodiment 30. The apparatus according to any one of embodiments 24 to 26, wherein the apparatus is a second network device;
the receiving unit is further configured to receive a second handover request message sent by a first network device, wherein the second handover request message comprises indication information indicating that the flight path information exists; and
the apparatus further comprises a third sending unit, configured to send a handover acknowledgment corresponding to the second handover request to the first network device, wherein the handover acknowledgment comprises configuration information, and the configuration information comprises at least one of the following:
   the distance between two adjacent target nodes, the quantity of target nodes in the flight path information, the flight time length between two adjacent target nodes, an indication for indicating to report a complete flight path, and an indication for indicating to report timestamp information of the target node.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A wireless communication method, comprising:
when a terminal device has reported a first flight path information to a network device, and a minimum distance between a current location of the terminal device and a reported flight path indicated by the first flight path information is greater than or equal to a first threshold, updating the first flight path information to a second flight path information;
reporting the second flight path information to the network device.

2. The method according to claim 1, wherein the updating the first flight path information to the second flight path information comprises:
sending an indication indicating that flight path information exists to the network device;
receiving a flight path request from the network device; and
generating the second flight path information.

3. The method according to claim 2, wherein the indication indicating that flight path information exists is included in an RRC connection setup complete message.

4. The method according to claim 2 or 3, wherein the method further comprises:
receiving a first message from the network device, wherein the first message comprises configuration information, and the configuration information comprises a quantity of target nodes in the second flight path information, or an indication for indicating to report timestamp information of at least one target node; and
generating the second flight path information comprises: generating the second flight path information based on the configuration information, wherein the second flight path information comprises location information of at least one target node.

5. The method according to claim 4, wherein the first message is a flight path request.

6. The method according to any one of claims 1 to 5, wherein the second flight path information comprises timestamp information of arrival at least one target node.

7. The method according to any one of claims 1 to 6, the first threshold is indicated by the network device.

8. A wireless communication method, comprising:
receiving a first flight path information from a terminal device;
receiving a second flight path information from the terminal device when a minimum distance between a current location of the terminal device and a reported flight path indicated by the first flight path information is greater than or equal to a first threshold.

9. The method according to claim 8, wherein the method further comprises:
receiving an indication indicating that flight path information exists from the terminal device;
sending a flight path request to the terminal device.

10. The method according to claim 9, wherein the indication indicating that flight path information exists is included in an RRC connection setup complete message.

11. The method according to any one of claims 8 to 10, wherein the method further comprises:
sending a first message to the terminal device, wherein the first message comprises configuration information, and the configuration information comprises a quantity of target nodes in the second flight path information, or an indication for indicating to report timestamp information of at least one target node, wherein the second flight path information comprises location information of at least one target node.

12. The method according to claim 11, wherein the first message is a flight path request.

13. The method according to any one of claims 8 to 12, wherein the second flight path information comprises timestamp information of arrival at least one target node.

14. The method according to any one of claims 8 to 13, wherein the method further comprises:
indicating the first threshold to the terminal device.

15. A wireless communications apparatus, configured to perform the methods according to any one of claims 1-14.

16. A computer-readable storage medium, wherein the computer-readable storage medium is configured to store instructions or a computer program, and when the instructions or the computer program is executed, the method according to any one of claims 1-14 is implemented.
